# EUROPÄISCHE PATENTSCHRIFT

(11) **EP 3 150 315 B1**
(45) Veröffentlichungstag und Bekanntmachung des Hinweises auf die Patenterteilung: **06.06.2018**
(21) Anmeldenummer: 16188870.6
(22) Anmeldetag: 15.09.2016
(51) Int. Cl.: B23C 5/10

(54) **SCHAFTFRÄSER**
MILL
FRAISE À QUEUE

(30) Priorität: 30.09.2015 DE 102015116623
(43) Veröffentlichungstag der Anmeldung: 05.04.2017
(73) Patentinhaber: Haimer GmbH, 86568 Igenhausen (DE)
(72) Erfinder: HAIMER, Franz-Josef, 86568 Igenhausen (DE); SANHIETER, Reinhold, 86558 Hohenwart (DE)
(74) Vertreter: Charrier Rapp & Liebau

(56) Entgegenhaltungen:
- EP-A1- 2 020 270
- WO-A2-02/070181
- WO-A2-2012/111004
- AT-U1- 14 275
- DE-A1- 3 706 282
- DE-A1-102014 103 103
- DE-B4- 10 325 600
- DE-B4-102005 002 698
- DE-U1-202012 008 940

## Beschreibung

Die Erfindung betrifft einen Schaftfräser zur spanabhebenden Bearbeitung von metallischen Werkstoffen, insbesondere Stahl und Titan, nach dem Oberbegriff des Anspruchs 1. Ein derartiger Schaftfräser geht beispielsweise aus der EP 2 020 270 A1 hervor.

Aus der DE 37 06 282 A1 ist ein Schaftfräser bekannt, welcher einen Befestigungsabschnitt und einen Schneidbereich aufweist. Der Schneidbereich wird durch einen rotationssymmetrischen Kern und vier Schneiden gebildet, welche helixförmig um den Kern herum angeordnet und einstückig mit dem Kern verbunden sind. Die vier Schneiden weisen jeweils eine umfangsseitige Hauptschneide und eine Nebenschneide an einer freien Stirnseite des Schneidbereichs auf. Hierdurch wird erreicht, dass bei einem Planfräsen mit den Nebenschneiden eine gute Oberflächenqualität erzielt wird. Bei derartigen Schaftfräsern besteht jedoch der Nachteil, dass sie für Bohrbearbeitungen, also eine spanabhebende Bearbeitung mit den Nebenschneiden bei einer Vorschubrichtung entlang der Rotationsachse des Schaftfräsers, nicht geeignet sind, da sich im zentrumsnahen Bereich keine Schneiden befinden. Selbst mit Werkzeugen, bei denen sich zumindest ein Teil der Schneiden im Wesentlichen bis zur Rotationsachse des Schaftfräsers erstreckt, ist eine Bohrbearbeitung schwierig, da die notwendige Spanabfuhr nicht zuverlässig gewährleistet werden kann. Um eine spanabhebende Bearbeitung an der gesamten Stirnseite zu ermöglichen, ist an der Stirnseite des Schneidbereichs eine Ausspitzung des Kerns zwischen den aneinander angrenzenden Schneiden vorgesehen.
Aufgabe der Erfindung ist es daher, einen einfach zu fertigenden und für die Bohrbearbeitung optimierten Schaftfräser zu schaffen.
Diese Aufgabe wird durch einen Schaftfräser, insbesondere aus Vollhartmetall, mit den Merkmalen des Anspruchs 1 gelöst. Vorteilhafte Ausgestaltungen der Erfindung sind in den Unteransprüchen angegeben.
Vorab sei klargestellt, dass ein Befestigungsabschnitt des Schaftfräsers nicht notgedrungen als zylindrischer Spannabschnitt ausgebildet sein muss. Die Koppelstelle kann beispielsweise auch konisch sein, ein Gewinde tragen oder Spannflächen umfassen. Unter Vollhartmetallfräsern werden Fräser verstanden, bei denen die spanabhebenden Schneiden fester Bestandteil des Werkzeugkörpers sind. Als Grundmaterial dieses Fräsers sind alle Schneidstoffe zu verstehen, die zum Zerspanen hochfester Werkstoffe geeignet sind, also neben Stählen beispielsweise auch keramische Materialien, PKD und Pulvermischungen.
Der erfindungsgemäße Schaftfräser zeichnet sich dadurch aus, dass die Ausspitzung einen Winkel von 30° bis 40° gegenüber der Rotationsachse des Schaftfräsers aufweist. Durch diese starke Ausspitzung des Kerns zwischen zwei aneinander angrenzenden Schneiden wird eine besonders gute Spanabfuhr ermöglicht, wobei trotz der Ausspitzung der Kern und die Schneiden im Bereich der Stirnseite des Schneidbereichs eine hohe Stabilität aufweisen. Unter Ausspitzung im Sinne der Erfindung ist jede Ausgestaltung umfasst, mit welcher das Material des Kerns und eventuell auch der Schneiden im Bereich der Stirnseite des Schneidbereichs in Umfangsrichtung begrenzt lokal zwischen den Schneiden reduziert wird. Als Kern ist der rotationssymmetrische Kernbereich eines Schaftfräsers im Schneidbereich zu verstehen. Die Schneiden sind um diesen Kern herum angeordnet und mit dem Kern einstückig ausgebildet. Der Boden jeder Spanabführnut, welche in Umfangsrichtung zwischen den Schneiden ausgebildet sind, wird dabei durch den Kern begrenzt. Der Winkel der Ausspitzung ist zwischen der länglichen Erstreckung der Ausspitzung und der Rotationsachse des Schaftfräsers definiert. Da die Ausspitzung als Nut ausgebildet ist, kann als Winkel der Ausspitzung der Winkel zwischen dem Nutgrund der Ausspitzung und der Rotationsachse des Schaftfräsers präzisiert werden. Dieser Nutgrund kann geradlinig oder gekrümmt verlaufen und in seiner Verlängerung die Rotationsachse des Schaftfräsers schneiden oder von dieser beabstandet sein. Verläuft der Nutgrund in seiner Verlängerung beabstandet von der Rotationsachse (windschief), ist als Winkel der Ausspitzung der Winkel zwischen der Rotationsachse und dem hierauf in eine Ebene projizierten Verlaufs des Nutgrunds zu verstehen.
In einer vorteilhaften Ausführungsform kann die Ausspitzung als in Richtung von dem Befestigungsabschnitt zu der Stirnseite des Schneidbereichs sich der Rotationsachse des Schaftfräsers annähernde Aussparung im Bereich der Stirnseite des Schneidbereichs ausgebildet sein. Eine derartige Aussparung kann beispielsweise besonders einfach durch Schleifen erreicht werden.

Um eine spanabhebende Bearbeitung an der gesamten Stirnseite beim Bohren durch mindestens eine Nebenschneide zu ermöglichen, kann sich die Aussparung in Radialrichtung des Schneidbereichs im wesentlichen bis zur Rotationsachse des Schaftfräsers erstrecken und die Nebenschneide im Bereich der Rotationsachse des Schaftfräsers begrenzen.

In einer besonders vorteilhaften Ausführungsform sind die Schneiden zumindest an der Stirnseite des Schneidbereichs ungleichmäßig verteilt angeordnet. Hierdurch kann die Stabilität der Schneiden erhöht werden, da Schneiden mit einem geringen Zwischenwinkel gegenseitig stabilisierend wirken. Um die Schwingungsneigung zu reduzieren, können die Schneiden zudem unterschiedliche Drallwinkel aufweisen, so dass die Schneiden im Schneidbereich außerhalb der Stirnseite zumindest abschnittsweise auch gleichverteilt angeordnet sein können.

Besonders vorteilhaft kann es sein, dass der Schneidbereich insgesamt vier Schneiden aufweist, von denen eine erste Schneide und eine dritte Schneide sowie eine zweite Schneide und eine vierte Schneide einander diametral gegenüberliegen, wobei die Ausspitzung zwischen der zweiten Schneide und der dritten Schneide sowie zwischen der ersten Schneide und der vierten Schneide vorgesehen ist und in Umfangsrichtung des Schneidbereichs der Winkel zwischen der ersten Schneide und der vierten Schneide und zwischen der zweiten Schneide und der dritten Schneide größer als 90° und kleiner als 110°, insbesondere gleich 100°, ist. Hierdurch wird gewährleistet, dass trotz der starken Ausspitzung zwischen der zweiten Schneide und der dritten Schneide sowie der ersten Schneide und der vierten Schneide die Schneiden durch den geringeren Winkelabstand zwischen der ersten Schneide und der zweiten Schneide sowie zwischen der dritten Schneide und der vierten Schneide die Schneiden sich gegenseitig stützen und hierdurch eine hohe Stabilität erreicht wird. Hierdurch ist der Schaftfräser besonders gut geeignet, um Bohrungen auch in schwer zerspanbaren Werkstoffen vorzunehmen.

Um die Bohrleistung des Schaftfräsers weiter zu steigern und die Spanabfuhr zu erleichtern, kann zwischen der ersten Schneide und der zweiten Schneide sowie zwischen der dritten Schneide und der vierten Schneide eine weitere Ausspitzung vorgesehen sein, welche einen Winkel von 20° bis 40° gegenüber der Rotationsachse des Schaftfräsers aufweist.

Insbesondere kann zur Erhöhung der Schnittleistung der Nebenschneide vorgesehen sein, dass die Schneiden im Schneidbereich helixförmig um die Rotationsachse des Schaftfräsers verlaufen und jede Schneide an der Stirnseite des Schneidbereichs eine einzige, ebene oder stetig gekrümmte Stirnfläche aufweist, welche die Schneide in Längsrichtung des Schaftfräsers an der Stirnseite begrenzt. Durch diese genau eine Stirnfläche an jeder Schneide an der Stirnseite des Schneidbereichs wird eine einzige Freifläche gebildet, welche gegenüber mehrfachen Freiflächen mit verschiedenen Freiwinkeln eine besonders stabile und für die besonderen Anforderungen des Schaftfräsers geeignete Stabilität und Wärmeabführung ermöglicht. Zudem ist eine derartige Ausgestaltung durch die eine Stirnfläche auch besonders einfach herzustellen und bei Bedarf nachzuschleifen, da nur eine Fläche mit einem Winkel bearbeitet werden muss.

Besonders bevorzugt weist die Stirnfläche jeder Schneide an der Nebenschneide einen Freiwinkel zwischen 5° und 7°, insbesondere gleich 6°, zu einer zu der Rotationsachse des Schaftfräsers senkrechten Ebene auf. Hierdurch kann insbesondere zusammen mit der beschriebenen Ausspitzung und der genau einen Stirnfläche der Schneiden an der Stirnseite des Schneidbereichs eine besonders stabile Nebenschneide mit einer hohen Abtragsleistung und Standfestigkeit erreicht werden.

Bei Betrachtung von der vorderen Stirnseite des Schneidbereichs des Schaftfräsers kann jede mindestens eine Nebenschneide zudem zumindest abschnittsweise einen gekrümmten, insbesondere konkaven Verlauf aufweisen, wodurch eine besonders vorteilhafte Spanführung in Zusammenhang mit den oben genannten Merkmalen erreicht wird.

Bevorzugt kann mindestens eine Nebenschneide in einem radial äußeren Bereich einen Vormittestand aufweisen. Ein Vormittestand ist dadurch gekennzeichnet, dass die zumindest eine Nebenschneide so ausgebildet ist, dass sie eine gedankliche Verbindung des der Stirnseite am nächsten liegenden Endpunktes der Hauptschneide, also dem Übergang von der Haupt- zur Nebenschneide, mit dem Mittelpunkt in Drehrichtung überragt. Vereinfacht gesagt bedeutet das, dass beide Schneiden vor der Rotationsachse stehen und sich ihre Schneiden in Richtung des Zentrums nicht an den Spitzen begegnen sondern sich teilweise überlappen.

Besonders vorteilhaft für die Bohrleistung kann es zudem sein, wenn die Schneiden an der Stirnseite des Schneidbereichs einen Hohlschliff aufweisen, also die Schneiden und damit insbesondere die Nebenschneiden an der Stirnseite in Richtung von der Rotationsachse radial nach außen in Längsrichtung des Schneidbereichs vorstehen, wodurch die Stirnfläche eine konkave Ausgestaltung aufweist.

Um die Spanabtragsleistung zusätzlich zu erhöhen, kann vorgesehen sein, dass der Kern des Schneidbereichs zwei konische Abschnitte mit unterschiedlicher Konizität aufweist. Ausgehend von der Stirnseite des Schneidbereichs kann ein erster konischer Abschnitt vorgesehen sein, welcher sich von einem Durchmesser, der dem 0,35-fachen des Schneidbereichsdurchmessers entspricht, bis zu einem Durchmesser, welcher dem 0,5-fachen des Schneidbereichsdurchmessers entspricht, erweitert. Dieser erste konische Abschnitt kann sich in Längsrichtung des Schneidbereichs über eine Länge des 0,25- bis 0,5-fachen des Schneidbereichsdurchmessers erstrecken. An diesen ersten konischen Teil kann sich unmittelbar ein zweiter konischer Bereich anschließen, welcher sich von dem zweiten Durchmesser, welcher dem 0,5-fachen des Schneibereichsdurchmesser entspricht bis zu einem Durchmesser, welcher dem 0,55-fachen des Schneidbereichsdurchmesser entspricht, erweitert. Dieser zweite konische Teil kann sich in Längsrichtung des Schneidbereichs über eine Länge erstrecken, welche dem Schneidbereichsdurchmesser entspricht.

Der erfindungsgemäße Fräser kann im Befestigungsabschnitt zudem mit Ausprägungen für eine Auszugssicherung vorgesehen sein, zum Beispiel in Form einer Weldon- oder Whistle-Notch-Fläche oder auch in Form einer schaftseitig beginnenden Sperrnut, wie in der WO 2007118626 A1 beschrieben oder in Form eines aus dem Befestigungsabschnitt hervorragenden Sperrelements.

Weitere Besonderheiten und Vorzüge der Erfindung ergeben sich aus der folgenden Beschreibung eines bevorzugten Ausführungsbeispiels anhand der Zeichnungen. Es zeigen:
- **Fig. 1**: eine Seitenansicht auf einen Vollhartmetall-Schaftfräser mit einem Schneidbereich und einem Befestigungsabschnitt;
- **Fig. 2**: eine Detailansicht des Vollhartmetall-Schaftfräsers aus Figur 1 im Bereich einer freien Stirnseite des Schneidbereichs;
- **Fig. 3**: eine Schnittansicht des Vollhartmetall-Schaftfräsers von Figur 1 entlang der Schnittlinie C-C;
- **Fig. 4**: eine Vorderansicht auf die freie Stirnseite des Vollhartmetall-Schaftfräsers aus Figur 1;
- **Fig. 5**: eine Schnittansicht des Vollhartmetall-Schaftfräsers im Bereich der freien Stirnseite des Schneidbereichs entlang der Schnittlinie D-D von Figur 4;
- **Fig. 6**: eine Schnittansicht des Vollhartmetall-Schaftfräsers im Bereich der freien Stirnseite des Schneidbereichs entlang der Schnittlinie E-E von Figur 4;
- **Fig. 7**: eine Detailansicht des Bereichs X von Figur 4 ;
- **Fig. 8**: eine Seitenansicht des Vollhartmetall-Schaftfräsers einer der Darstellung des Kerns des Schneidbereichs;
- **Fig. 9**: eine Seitenansicht eines weiteren Ausführungsbeispiels des Vollhartmetall-Schaftfräsers in Form eines Einschraubfräsers ;
- **Fig. 10**: eine Vorderansicht auf die freie Stirnseite des Vollhartmetall-Schaftfräsers aus Figur 9;
- **Fig. 11**: eine Schnittansicht des Vollhartmetall-Schaftfräsers im Bereich der freien Stirnseite des Schneidbereichs entlang der Schnittlinie F-F von Figur 10;
- **Fig. 12**: eine Schnittansicht des Vollhartmetall-Schaftfräsers im Bereich der freien Stirnseite des Schneidbereichs entlang der Schnittlinie G-G von Figur 10 und
- **Fig. 13**: eine Detailansicht des Bereichs X2 von Figur 10.

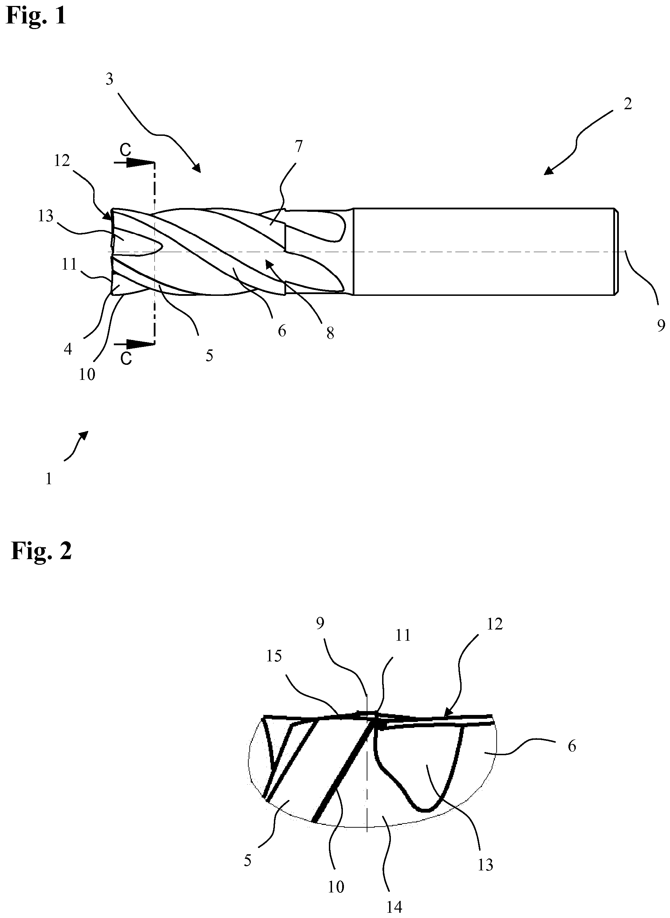

In Figur 1 ist ein Vollhartmetall-Schaftfräser 1 in einer Seitenansicht gezeigt. Der Vollhartmetall-Schaftfräser 1 weist einen Befestigungsabschnitt 2 und einen Schneidbereich 3 mit vier Schneiden 4, 5, 6 und 7 auf. Der Befestigungsabschnitt 2 weist eine zylindrische Form auf und ist zur Aufnahme in einem nicht dargestellten Spannfutter einer Werkstückbearbeitungsmaschine wie beispielsweise eines CNC-Fräsbearbeitungszentrums ausgebildet. An den Befestigungsabschnitt 2 schließt sich der Schneidbereich 3 an, welcher durch einen Kern 8 und die um den Kern 8 angeordneten Schneiden 4, 5, 6 und 7 gebildet wird. Die Schneiden 4, 5, 6 und 7 verlaufen helixförmig um eine Rotationsachse 9 des Vollhartmetall-Schaftfräsers 1 und sind einstückig mit dem Kern 8 ausgebildet.

Jede Schneide 4, 5, 6 und 7 weist jeweils eine umfangsseitige Hauptschneide 10 und eine Nebenschneide 11 an einer Stirnseite 12 des Schneidbereichs 3 auf, welche dazu ausgebildet sind, bei einer Rotation des Vollhartmetall-Schaftfräsers 1 um die Rotationsachse 9 spanabhebend mit dem zu bearbeitenden Werkstück zusammenzuwirken. Zur besseren Übersicht sind die Bezugszeichen für die Hauptschneide 10 und die Nebenschneide 11 bei der Darstellung in den Figuren nicht für alle Schneiden 4, 5, 6 und 7 eingetragen, jede Schneide 4, 5, 6 und 7 verfügt jedoch über sowohl eine Hauptschneide 10 als auch eine Nebenschneide 11.

Im Bereich der Stirnseite 12 des Schneidbereichs 3 ist zudem zumindest eine Ausspitzung 13 des Kerns 8 vorgesehen. Durch diese Ausspitzung 13 wird der Kern 8 in Umfangsrichtung des Vollhartmetall-Schaftfräsers 1 lokal begrenzt zwischen den Schneiden 5 und 6 im Querschnitt reduziert.

In Figur 2 ist der Vollhartmetall-Schaftfräser 1 aus Figur 1 in einer Detailansicht im Bereich der Stirnseite 12 des Schneidbereichs 3 dargestellt. Wie der Figur 2 zu entnehmen ist, ist die Ausspitzung 13 als beispielsweise mittels Schleifen erzeugte und in Richtung von dem Befestigungsabschnitt 2 zu der Stirnseite 12 des Schneidbereichs 3 sich der Rotationsachse 9 des Vollhartmetall-Schaftfräsers 1 annähernde Aussparung im Bereich der Stirnseite 12 des Schneidbereichs 3 in einer Spanabführnut 14 zwischen den zwei Schneiden 5 und 6 ausgebildet. Die Spanabführnut 14 ist zwischen jeder der Schneiden 4, 5, 6 und 7 angeordnet und dient der Abführung der von den Hauptschneiden 10 und den Nebenschneiden 11 der Schneiden 4, 5, 6 und 7 erzeugten Späne. Durch die Ausspitzung 13 wird der Querschnitt der Spanabführnuten 14 im Bereich der Stirnseite 12 des Schneidbereichs 3 vergrößert, wodurch Späne insbesondere aus dem zentrumsnahen Bereich der Nebenschneiden 11 besonders gut abtransportiert werden können.

Die in Figur 2 dargestellte Schneide 5 wie auch die weiteren Schneiden 4, 6 und 7, weist einen Freiwinkel 24 von 5° bis 7° und insbesondere 6° auf, dass heißt der Winkel zwischen einer Stirnfläche 15 jeder Nebenschneide 11 und einer zur Rotationsachse 9 senkrechten Ebene beträgt 5° bis 7°, bzw. insbesondere 6°.

Wie zudem zu erkennen ist, weisen die Schneiden 4, 5, 6 und 7 an der Stirnseite 12 des Schneidbereichs 3 einen Hohlschliff auf, das heißt, dass die Schneiden 4, 5, 6 und 7 und damit insbesondere die Nebenschneiden 11 an der Stirnseite 12 in Richtung von der Rotationsachse 9 radial nach außen in Längsrichtung des Schneidbereichs 3 vorstehen, wodurch die Stirnfläche 12 eine konkave Ausgestaltung aufweist.

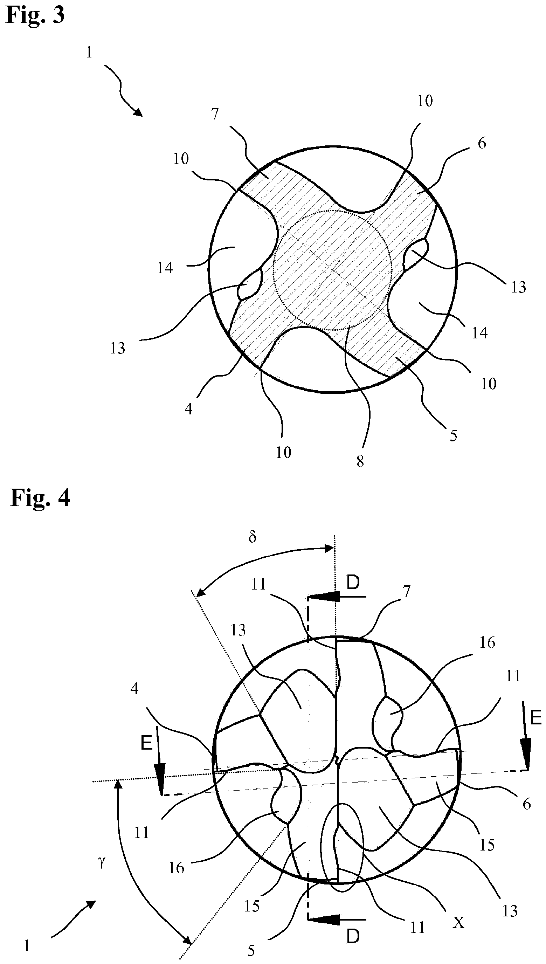

In Figur 3 ist ein Querschnitt des Vollhartmetall-Schaftfräsers 1 entlang der Linie C-C von Figur 1 dargestellt. Wie dort anhand der hilfsweise eingezeichneten Strich-Punkt-Linien zu entnehmen ist, sind die Schneiden 4, 5, 6 und 7 zusammen mit den Hauptschneiden 10 in Umfangsrichtung des Vollhartmetall-Schaftfräsers 1 ungleichmäßig verteilt angeordnet. So liegen zwar eine erste Schneide 4 und eine dritte Schneide 6 sowie eine zweite Schneide 5 und eine vierte Schneide 7 einander diametral gegenüber, entgegen der Umlaufrichtung der Schneiden 4, 5, 6 und 7, also in Figur 3 im Uhrzeigersinn, ist jedoch der Winkel zwischen der ersten Schneide 4 und der anschließenden vierten Schneide 7 und zwischen der dritten Schneide 6 und der anschließenden zweiten Schneide 5 größer als 90°, besonders bevorzugt mit genau 100°, ausgebildet. Das bedeutet, dass damit der Winkel zwischen der dritten Schneide 6 und der vierten Schneide 7 sowie zwischen der ersten Schneide 4 und der zweiten Schneide 5 weniger als 90° und bevorzugt genau 80° aufweist.

Die Schneiden 4, 5, 6 und 7 erstrecken sich in Umfangsrichtung an ihrer Außenseite in etwa über eine Länge, welche dem 0,1- bis 0,2-fachen des Durchmessers des Schneidbereichs 2 (Schneidbereichsdurchmesser) entspricht.

Zwischen der zweiten Schneide 5 und der dritten Schneide 6 sowie zwischen der vierten Schneide 7 und der ersten Schneide 4 ist die Ausspitzung 13 vorgesehen. Durch die Ausspitzung 13 wird der Querschnitt des Schneidbereichs 3 und insbesondere der ersten Schneide 4 in der Spanabführnut 14 zwischen der vierten Schneide 7 und der ersten Schneide 4 sowie der dritten Schneide 6 in der Spanabführnut 14 zwischen der zweiten Schneide 5 und der dritten Schneide 6 reduziert. Durch den oben beschrieben reduzierten Winkel zwischen der ersten Schneide 4 und der zweiten Schneide 5 sowie zwischen der dritten Schneide 6 und der vierten Schneide 7 wird erreicht, dass die Stabilität der ersten Schneide 4 und der dritten Schneide 6 aufgrund der räumlichen Nähe zu der zweiten Schneide 5 bzw. der vierten Schneide 7 nicht verringert ist. Im Bereich näher der Stirnseite 12 des Schneidbereichs 3 wird durch die Ausspitzung 13 auch der Querschnitt des in Figur 3 mittels der punktierten Linie dargestellten im Querschnitt kreisförmigen Kerns 8 reduziert, wie sich aus der folgenden Figur ergibt.

In Figur 4 ist eine Vorderansicht auf die freie Stirnseite 12 des Schneidbereichs 3 des Vollhartmetall-Schaftfräsers 1 gezeigt. Wie auch schon in der Schnittansicht der Figur 3 angedeutet ist, sind die Schneiden 4, 5, 6 und 7 auch an der Stirnseite 12 des Schneidbereichs ungleichmäßig verteilt. Da der Drallwinkel der Schneiden 4, 5, 6 und 7 bei dem gezeigten Ausführungsbeispiel über die Länge des gesamten Schneidbereichs 3 konstant ist, entsprechen die Winkel zwischen den Schneiden 4, 5, 6 und 7 an der Stirnseite 12 denen in Figur 3 gezeigten, der Winkel zwischen der ersten Schneide 4 und der zweiten Schneide 5 sowie zwischen der dritten Schneide 6 und der vierten Schneide 7 ist folglich kleiner als 90° insbesondere 80° wobei sich die erste Schneide 4 und die dritte Schneide 6 sowie die zweite Schneide 5 und die vierte Schneide 7 diametral gegenüberliegen. Diese Ungleichteilung der Schneiden 4, 5, 6 und 7 ist von besonderer Bedeutung im Bereich der Stirnseite 12 des Schneidbereichs 3 und insbesondere im Schneidbereich 3, da hier die Reduzierung des Querschnitts des Kerns 8 des Vollhartmetall-Schaftfräsers 1 durch die Ausspitzung 13 am stärksten ausgeprägt ist, um die zwei im Wesentlichen bis zur Rotationsachse 9 reichenden Nebenschneiden 11 zu bilden und zu begrenzen sowie eine Spanabfuhr von den Nebenschneiden 11 in axialer Richtung nahe der Rotationsachse 9 zu ermöglichen. Dies ist insbesondere bei Bohrbearbeitungen von besonderer Bedeutung, da bei einer Bohrung im Vollmaterial ohne Vorbohrung Material über den gesamten Querschnitt des Schneidbereichs 3 spanabhebend abgetragen werden muss. Die Ausspitzung 13 ist so ausgebildet, dass sie an der Stirnseite 12 des Schneidbereichs 3 an die Rotationsachse 9 bis auf ein Maß heranreicht, welches dem 0,005- bis 0,015-fachen des Schneidbereichsdurchmessers entspricht. In Radialrichtung erstreckt sich die Ausspitzung 13 an der Stirnseite 12 des Schneidbereichs 3 in einer Länge, die dem 0,575- bis 0,75-fachen des Schneidbereichsdurchmessers entspricht. Des Weiteren verlaufen die Flanken der Ausspitzung 13 in der in Figur 4 gezeigten Draufsicht auf die Stirnseite 12 aufeinander zu in einem in der Perspektive erscheinenden Winkel δ von 30° bis 45°, wobei die Spitze in Richtung der Rotationsachse 9 mit einem Radius verrundet ist, welcher dem 0,075- bis 0,125-fachen des Schneidbereichsdurchmessers entspricht.

Wie der Figur 4 weiter zu entnehmen ist, ist zwischen der ersten Schneide 4 und der zweiten Schneide 5 sowie zwischen der dritten Schneide 6 und der vierten Schneide 7 jeweils eine weitere Ausspitzung 16 vorgesehen, die wie auch jede Ausspitzung 13 als beispielsweise mittels Schleifen erzeugte und in Richtung von dem Befestigungsabschnitt 2 zu der Stirnseite 12 des Schneidbereichs 3 sich der Rotationsachse 9 des Vollhartmetall-Schaftfräsers 1 annähernde Aussparung im Bereich der Stirnseite 12 des Schneidbereichs ausgebildet ist. Die weitere Ausspitzung 16 reduziert dabei sowohl den Querschnitt des Kerns 8 des Schneidbereichs 3 als auch den Querschnitt der zweiten Schneide 5 in der Spanabführnut 14 zwischen der ersten Schneide 4 und der zweiten Schneide 5 und den Querschnitt der vierten Schneide 7 in der Spanabführnut 14 zwischen der dritten Schneide 6 und der vierten Schneide 7. Wie der Figur 4 zu entnehmen und in Bezug auf die folgenden Figuren noch näher beschrieben wird, ist jede weitere Ausspitzung 16 weniger stark ausgebildet, als jede Ausspitzung 13, um den Zusammenhalt der ersten Schneide 4 mit der zweiten Schneide 5 sowie der dritten Schneide 6 mit der vierten Schneide 7 nicht zu schwächen. Die weiteren Ausspitzungen 16 erstrecken sich bei Betrachtung von der Stirnseite 12 des Schneidbereichs 3 in Richtung der Nebenschneiden 11 der zweiten Schneide 5 und der vierten Schneide 7 bis zu einem Abstand, der dem 0,1- bis 0,2-fachen des Schneidbereichsdurchmessers entspricht. Zudem ist jede weitere Ausspitzung 16 in Richtung der Rotationsachse 8 mit einem Radius verrundet, welcher dem 0,1- bis 0,3-fachen des Schneidbereichsdurchmesser entspricht. Des Weiteren laufen die Flanken der Ausspitzung 16 in der in Figur 4 gezeigten Draufsicht in einem Winkel γ aufeinander zu, der in der perspektivischen Ansicht einen Wert von 30° bis 45°annehmen kann.

Wie bereits angedeutet, ist die beschriebene Ungleichteilung der Schneiden 4, 5, 6 und 7 im Bereich der Stirnseite 12 des Schneidbereichs 3 von besonderer Bedeutung für die Stabilität der Schneiden 4, 5, 6 und 7 in Zusammenhang mit der Ausbildung der Ausspitzungen 13 und der weiteren Ausspitzung 16. Anders als in Bezug auf Figur 3 beschrieben, kann sich die Ungleichteilung der Schneiden 4, 5, 6 und 7 im Schneidbereich 3 entlang der Rotationsachse 9 ändern, beispielsweise durch unterschiedliche Drallwinkel der Schneiden 4, 5, 6 und 7, so dass auch eine Gleichteilung der Schneiden 4, 5, 6 und 7 in einem Querschnitt außerhalb der Stirnseite 12 vorliegen kann.

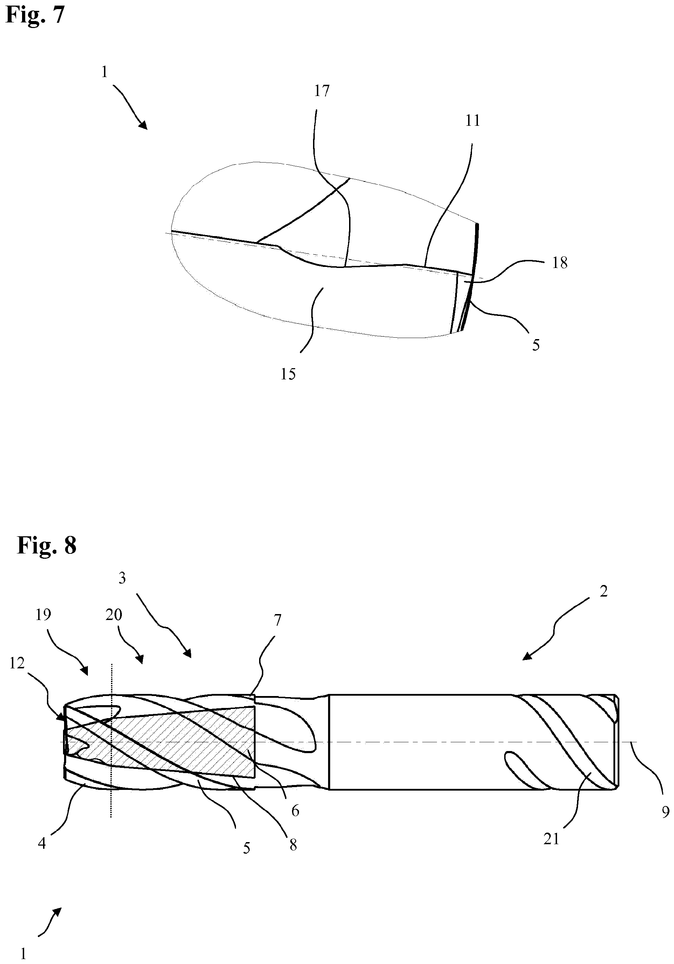

Wie der Figur 4 zudem zu entnehmen ist, wird jede Schneide 4, 5, 6 und 7 an der Stirnseite 12 des Schneidbereichs 3 durch eine einzige, ebene Stirnfläche 15 in Längsrichtung des Vollhartmetall-Schaftfräsers 1, das heißt in Richtung der Rotationsachse 9, an der Stirnseite 12 begrenzt. Wie bereits dargelegt, beträgt der Freiwinkel der Nebenschneiden 11 zwischen 5° und 7° und insbesondere genau 6°. Es ist jedoch auch möglich, diese Stirnfläche 15 stetig gekrümmt auszubilden. In diesem Fall vergrößert sich dieser Winkel der gekrümmten Stirnseite 12 ausgehend von dem Freiwinkel an jeder Nebenschneide 11. Jede Nebenschneide 11 weist zudem einen, zu einer Achse quer zur Rotationsachse, gekrümmten Verlauf auf, wie insbesondere in Bezug auf Figur 7 noch näher erläutert wird. Ein gerader Verlauf ist jedoch auch möglich. Wie der Figur 4 zudem zu entnehmen ist, überlappen sich die gegenüberliegenden Ausspitzungen 13 über die Rotationsachse 9 hinweg um das 0,075-fache bis 0.25-fache des Schneidbereichsdurchmessers.

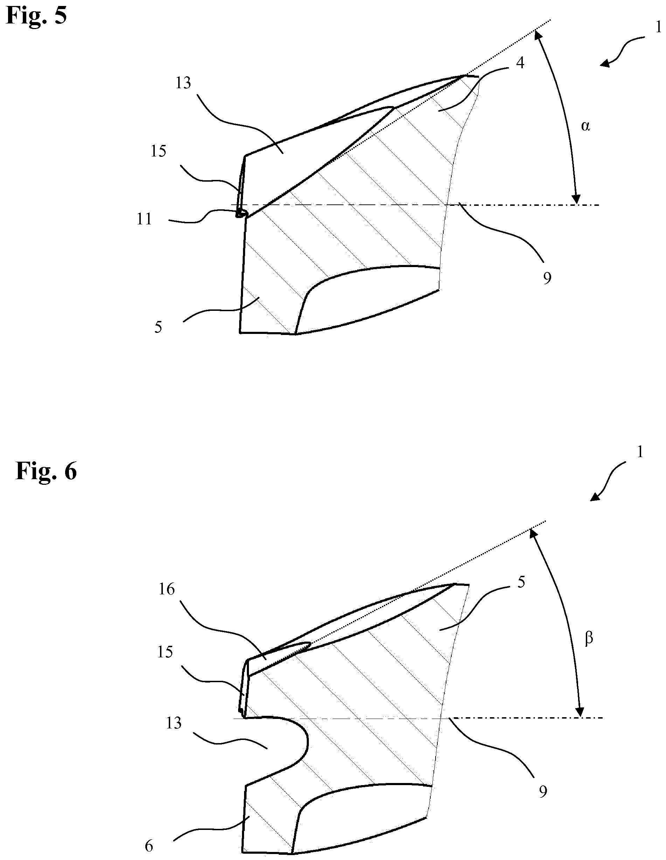

In Figur 5 ist eine Schnittansicht durch den Vollhartmetall-Schaftfräser 1 im Bereich der Stirnseite 12 des Schneidbereichs 3 entlang der Linie D-D von Figur 4 gezeigt. Dieser Schnitt D-D verläuft außermittig durch die erste Schneide 4 mit der Ausspitzung 13 zwischen der vierten Schneide 7 und der ersten Schneide 4 sowie durch die zweite Schneide 5. Die Ausspitzung 13 verläuft dabei entlang der hilfsweise eingezeichneten punktierten Linie in einem Winkel α von 30° bis 40° zu der Rotationsachse 9. Der Winkel α ist der Winkel der Ausspitzung 13. Die Erstreckung der Ausspitzung 13 in Richtung der Rotationsachse 9 weist dabei eine Länge auf, die dem 0,2- bis 0,5-fachen des Schneidbereichsdurchmessers entspricht.

In Figur 6 ist eine Schnittansicht durch den Vollhartmetall-Schaftfräser 1 im Bereich der Stirnseite 12 des Schneidbereichs 3 entlang der Linie E-E von Figur 4 gezeigt. Dieser Schnitt E-E verläuft außermittig durch die zweite Schneide 5 mit der weiteren Ausspitzung 16 zwischen der ersten Schneide 4 und der zweiten Schneide 5 sowie durch die dritte Schneide 6. Wie zu erkennen ist, verläuft dabei die weitere Ausspitzung 16 entlang der hilfsweise eingezeichneten punktierten Linie in einem Winkel β von 20° bis 40° zu der Rotationsachse 9. Die weitere Ausspitzung 16 erstreckt sich dabei in Radialrichtung anders als jede Ausspitzung 13 nicht über die Rotationsachse 9 hinweg, die radiale Erstreckung ist folglich kleiner als das 0,5-fache des Schneidbereichsdurchmessers. Der Winkel β ist der Winkel der Ausspitzung 16. Die Winkel jeder Ausspitzung 13 und jeder weiteren Ausspitzung 16 zu der Rotationsachse 9 können dabei gleich oder unterschiedlich ausgebildet sein.

In Figur 7 ist eine Detailansicht des Bereichs X von Figur 4 dargestellt. Wie dort zu entnehmen ist, weist die Nebenschneide 11 der zweiten Schneide 5 wie auch jeder weiteren Schneide 4, 6 und 7 bei Betrachtung von der Stirnseite 12 des Schneidbereichs 3 eine Ausbuchtung 17 mit einem gekrümmten, insbesondere konkaven Verlauf auf. Hierdurch werden insbesondere in Zusammenhang mit den oben genannten Merkmalen eine besonders vorteilhafte Spanführung und damit auch eine vorteilhafte Spanabfuhr bei Bohr-Operationen erreicht. Die Ausbuchtung 17 beginnt dabei bei einer Entfernung von der Rotationsachse 9, welche dem 0,2- bis 0,35-fachen des Schneidbereichsdurchmessers entspricht und erstreckt sich in radialer Richtung über eine Länge, welche dem 0,1- bis 0,25-fachen des Schneidbereichsdurchmessers entspricht. Der Radius der Ausbuchtung 17 beträgt das 0,1- bis 0,25-fache des Schneidbereichsdurchmessers.

In Figur 7 ist zudem durch die Strich-Punkt-Linie die Mittellinie der Nebenschneide 11 angedeutet, welche durch die Rotationsachse 9 verläuft. Die Ausbuchtung 17 weist dabei von der Mittellinie einen Abstand auf, der dem 0- bis 0,015-fachen des Schneidbereichsdurchmesser entspricht und der übrige geradlinig verlaufende Teil der Nebenschneide ist von der Mittellinie um eine Länge beabstandet, welche von dem 0,002-fachen des Schnittbereichsdurchmessers entgegen der Umlaufrichtung der zweiten Schneide 5 bis zum 0,01-fachen des Schnittbereichsdurchmessers in Umlaufrichtung der zweiten Schneide 5 reicht. Dieser Abstand von der Mittellinie ist der Vormitteabstand. Da die Blende entlang der Nebenschneide über die Eckfase 18 hinausgeht, entsteht zwischen Eckfase und Hauptschneide eine weitere Fase.

Wie der Detailansicht in Figur 7 weiter zu entnehmen ist, ist am Übergang zwischen den Nebenschneiden 11 und den Hauptschneiden 10 eine Eckfase 18 vorgesehen, wodurch eine bessere Wärmeableitung und höhere Standzeit sowie eine bessere Zentrierung des Vollhartmetall-Schaftfräsers 1 bei Bohr-Operationen erreicht wird.

In Figur 8 ist eine Seitenansicht des Vollhartmetall-Schaftfräsers 1 mit einer der schematischen Darstellung des Kerns 8 des Schneidbereichs 3 gezeigt. Wir dort zu entnehmen ist, weist der Kern 8 des Schneidbereichs 3 zwei konische Abschnitte 19 und 20 mit unterschiedlicher Konizität auf. Ausgehend von der Stirnseite 12 des Schneidbereichs 3 kann ein erster konischer Abschnitt 19 vorgesehen sein, welcher sich von einem Durchmesser, der dem 0,35-fachen des Schneidbereichsdurchmessers entspricht, bis zu einem Durchmesser, welcher dem 0,5-fachen des Schneidbereichsdurchmessers entspricht, erweitert. Dieser erste konische Abschnitt 19 kann sich in Längsrichtung des Schneidbereichs, also entlang der Rotationsachse 9, über eine Länge des 0,25-fachen bis ganzen Schneidbereichsdurchmesser erstrecken. An diesen ersten konischen Abschnitt 19 kann sich unmittelbar ein zweiter konischer Abschnitt 20 anschließen, welcher sich von dem zweiten Durchmesser, welcher dem 0,5-fachen des Schneidbereichsdurchmesser entspricht, bis zu einem Durchmesser, welcher dem 0,55-fachen des Schneidbereichsdurchmesser entspricht, erweitert. Dieser zweite konische Abschnitt 20 kann sich in Längsrichtung des Schneidbereichs über eine Länge erstrecken, welche dem Schneidbereichsdurchmesser entspricht. An dem Befestigungsabschnitt 2 ist zudem eine Auszugssicherung in Form einer schaftseitig von dem freien Ende des Befestigungsabschnitts 2 beginnenden Sperrnut 21 vorgesehen. Zur Ausbildung der Sperrnut 21 wird Bezug genommen auf die WO 2007118626 A1. Eine alternative Ausgestaltung der Sperrnut könnte eine Whistle-Notch oder Weldon-Nut sein.

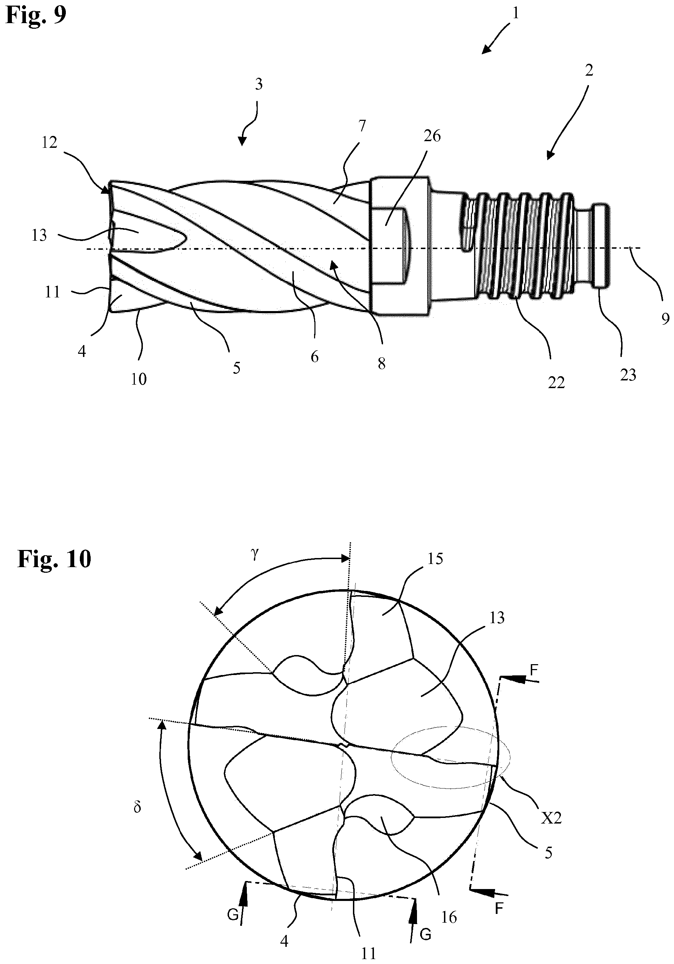

Figur 9 zeigt eine Seitenansicht eines weiteren Ausführungsbeispiels des Schaftfräsers 1 in Form eines Einschraubfräsers. Dieser Schaftfräser 1 unterscheidet sich von dem Schaftfräser der Figuren 1 bis 8 dadurch, dass der Befestigungsabschnitt 2 teilweise konisch ausgebildet ist und ein Gewinde 22 zur Verschraubung mit einer nicht dargestellten Werkzeugaufhahme einer Maschinenspindel aufweist. An dem schaftseitigen freien Ende des Befestigungsabschnitts 2 ist zudem ein weiterer Stützbereich 23 vorgesehen. Um das Einschrauben des Vollhartmetall-Schaftfräsers 1 zu erleichtern, weist der Befestigungsabschnitt 2 Schlüsselflächen 26 auf, welche zum Eingriff von entsprechendem Werkzeug ausgebildet sind. Zu dieser Ausgestaltung des Befestigungsabschnitts 2 wird Bezug genommen auf die DE 10 2012 100 976 und DE 10 2015 112 079. Die im Übrigen mit der Ausführungsform der Figuren 1 bis 8 gleichen Merkmale sind mit den gleichen Bezugszeichen versehen.
Die Figur 10 zeigt ebenso wie die Figur 4 eine Vorderansicht auf die freie Stirnseite 12 des Schneidbereichs 3 des Schaftfräsers 1, allerdings mit anderen Schnittebenen.

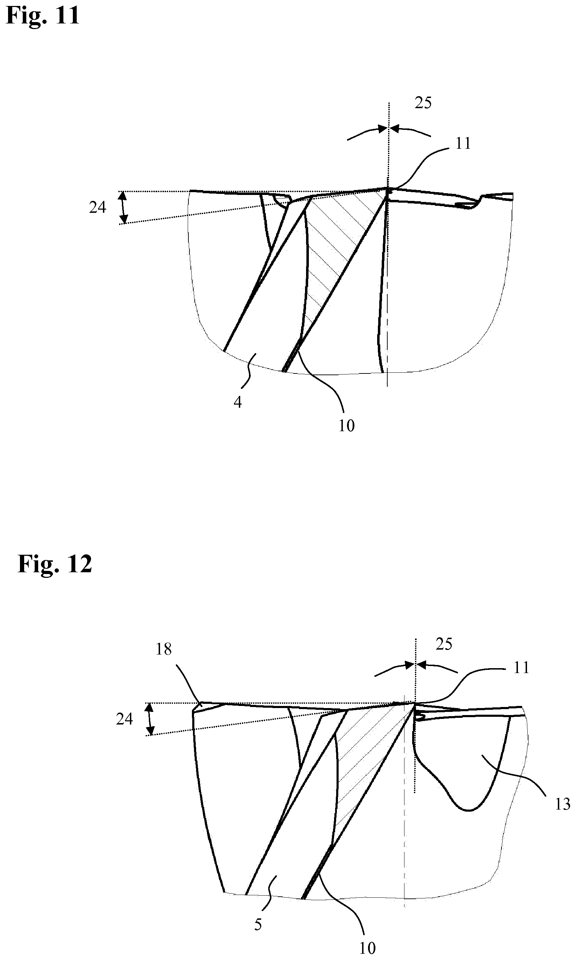

Die Figuren 11 und 12 zeigen eine Schnittansicht der Figur 10 entlang der Schnittlinie F-F und G-G. Gut erkennbar ist hier der bereits in der Beschreibung zur Figur 2 angesprochene, aber nicht gezeigte Freiwinkel 24 und der Stirnspanwinkel 25. Der Stirnspanwinkel 25 beträgt dabei zwischen 3° und -3°, vorzugsweise zwischen 1,5° und -1,5°, höchst vorzugsweise 0°.

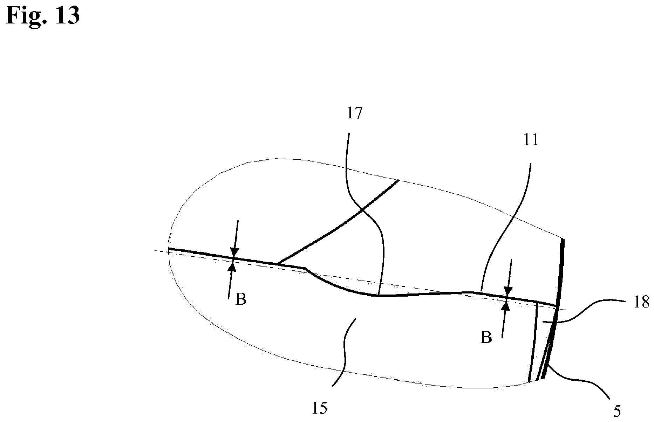

Figur 13 zeigt eine Detailansicht des Bereichs X2 von Figur 10. Zusätzlich zur Darstellung von Figur 7 ist hier der Vormitteabstand B dargstellt.
Die in diesem Ausführungsbeispiel beschriebenen technischen Merkmale lassen sich einzeln oder in der Gesamtheit kombinieren, um die gestellte Aufgabe besonders vorteilhaft zu lösen.

### Bezugszeichenliste

- 1: Vollhartmetall-Schaftfräser
- 2: Befestigungsabschnitt
- 3: Schneidbereich
- 4: Erste Schneide
- 5: Zweite Schneide
- 6: Dritte Schneide
- 7: Vierte Schneide
- 8: Kern
- 9: Rotationsachse
- 10: Hauptschneide
- 11: Nebenschneide
- 12: Stirnseite des Schneidbereichs
- 13: Ausspitzung
- 14: Spanabführnuten
- 15: Stirnfläche
- 16: Weitere Ausspitzung
- 17: Ausbuchtung
- 18: Eckfase
- 19: Erster konischer Abschnitt des Kerns
- 20: Zweiter konischer Abschnitt des Kerns
- 21: Sperrnut
- 22: Gewinde
- 23: Weiterer Stützbereich
- 24: Freiwinkel
- 25: Stirnspanwinkel
- 26: Schlüsselfläche

## Patentansprüche

1. Schaftfräser (1), vorzugsweise aus Vollhartmetall, mit einem Befestigungsabschnitt (2) und einem Schneidbereich (3), wobei der Schneidbereich (3) durch einen Kern (8) und um den Kern (8) angeordnete drei oder vier helixförmig um eine Rotationsachse (9) des Schaftfräsers (1) verlaufende Schneiden (4; 5; 6; 7) gebildet wird, von denen jede jeweils eine umfangsseitige Hauptschneide (10) und eine Nebenschneide (11) an einer Stirnseite (12) des Schneidbereichs (3) aufweist, wobei an der Stirnseite (12) des Schneidbereichs (3) zumindest eine Ausspitzung (13) des Kerns (8) zwischen zwei aneinander angrenzenden Schneiden (4; 5; 6; 7) vorgesehen ist, **dadurch gekennzeichnet, dass** die Ausspitzung (13) einen Winkel von 30° bis 40° gegenüber der Rotationsachse (9) des Schaftfräsers (1) aufweist.

2. Schaftfräser (1) nach Anspruch 1, **dadurch gekennzeichnet, dass** die Ausspitzung (13) als in Richtung von dem Befestigungsabschnitt (2) zu der Stirnseite (12) des Schneidbereichs (3) sich der Rotationsachse (9) des Schaftfräsers (1) annähernde Aussparung im Bereich der Stirnseite (12) des Schneidbereichs (3) ausgebildet ist.

3. Schaftfräser (1) nach Anspruch 1 oder 2, **dadurch gekennzeichnet, dass** sich die Ausspitzung (13) in Radialrichtung im Wesentlichen bis zur Rotationsachse (9) des Schaftfräsers (1) erstreckt und die Nebenschneide (11) im Bereich der Rotationsachse (9) des Schaftfräsers (1) begrenzt.

4. Schaftfräser (1) nach einem der Ansprüche 1 bis 3, **dadurch gekennzeichnet, dass** die Schneiden (4; 5; 6; 7) in Umfangsrichtung des Schaftfräsers (1) ungleichmäßig verteilt sind.

5. Schaftfräser (1) nach einem der vorhergehenden Ansprüche, **dadurch gekennzeichnet, dass** der Schneidbereich (12) insgesamt vier Schneiden (4; 5; 6; 7) umfasst, von denen eine erste Schneide (4) und eine dritte Schneide (6) sowie eine zweite Schneide (5) und eine vierte Schneide (7) einander diametral gegenüberliegen und die Ausspitzung (13) zwischen der zweiten Schneide (5) und der dritten Schneide (6) sowie zwischen der ersten Schneide (4) und der vierten Schneide (7) vorgesehen ist, wobei in Umfangsrichtung des Schneidbereichs (12) der Winkel zwischen der ersten Schneide (4) und der vierten Schneide (7) und zwischen der zweiten Schneide (5) und der dritten Schneide (6) größer als 90°, insbesondere gleich 100°, ist.

6. Schaftfräser (1) nach Anspruch 5, **dadurch gekennzeichnet, dass** zwischen der ersten Schneide (4) und der zweiten Schneide (5) sowie zwischen der dritten Schneide (6) und der vierten Schneide (7) eine weitere Ausspitzung (16) vorgesehen ist, welche einen Winkel von 20° bis 40° gegenüber der Rotationsachse (9) des Schaftfräsers (1) aufweist.

7. Schaftfräser (1) nach einem der vorhergehenden Ansprüche, **dadurch gekennzeichnet, dass** die Schneiden (4; 5; 6; 7) im Schneidbereich (3) helixförmig um die Rotationsachse (9) des Schaftfräsers (1) verlaufen und jede Schneide (4; 5; 6; 7) an der Stirnseite (12) des Schneidbereichs (3) eine einzige, ebene oder stetig gekrümmte Stirnfläche (15) aufweist, welche die Schneide (4; 5; 6; 7) in Längsrichtung des Schaftfräsers (1) an der Stirnseite (12) begrenzt.

8. Schaftfräser (1) nach Anspruch 7, **dadurch gekennzeichnet, dass** die Stirnfläche (15) jeder Schneide (4; 5; 6; 7) an der Nebenschneide (11) einen Freiwinkel zwischen 5° und 7°, insbesondere gleich 6°, zu einer zu der Rotationsachse (9) des Schaftfräsers (1) senkrechten Ebene aufweist.

9. Schaftfräser (1) nach einem der vorhergehenden Ansprüche, **dadurch gekennzeichnet, dass** jede Nebenschneide (11) einen gekrümmten Verlauf aufweist.

10. Schaftfräser (1) nach Anspruch 9, **dadurch gekennzeichnet, dass** jede Nebenschneide (1) in einem radial äußeren Bereich einen Vormittestand aufweist.

11. Schaftfräser (1) nach einem der vorhergehenden Ansprüche, **dadurch gekennzeichnet, dass** die Schneiden (4; 5; 6; 7) an der Stirnseite (12) des Schneidbereichs (3) einen Hohlschliff aufweisen.

12. Schaftfräser (1) nach einem der vorhergehenden Ansprüche, **dadurch gekennzeichnet, dass** der Kern (8) des Schneidbereichs (3) zwei konische Abschnitte (19; 20) mit unterschiedlicher Konizität aufweist.

## Claims

1. End mill (1), preferably made of solid carbide, having an attachment section (2) and a cutting region (3), wherein the cutting region (3) is formed by a core (8) and three or four cutting edges (4; 5; 6; 7) running helically around a rotational axis (9) of the end mill (1)and arranged around the core (8), of which cutting edges (4; 5; 6; 7) each has in each case one peripheral maincutting edge (10) and a secondary cutting edge (11) on an end side (12) of the cutting region (3), wherein on the end side (12) of the cutting region (3), at leastonepoint thinning (13) of the core (8) is provided between two cutting edges (4; 5; 6; 7) adjoining one another, **characterised in that** the point thinning (13) has an angle of 30° to 40° with respect to the rotational axis (9) of the end mill (1).

2. End mill (1) according to claim 1, characterisedin that the point thinning (13) is formedin the region of the end side (12) of the cutting region (3) as a recess approaching the rotational axis (9) of the end mill (1) in the direction from the attachment section (2) to the end side (12) of the cutting region (3).

3. End mill (1) according to claim 1 or 2, characterisedin that the point thinning (13) extends in radial direction essentially as far as the rotational axis (9) of the end mill (1) and limits the secondary cutting edge (11) in the region of the rotational axis (9) of the end mill (1).

4. End mill (1) according to one of claims 1 to 3, **characterised in that** the cutting edges (4; 5; 6; 7) are non-uniformly distributed peripherally of the end mill (1).

5. End mill (1) according to one of the preceding claims, **characterised in that** the cutting region (12) comprises a total of four cutting edges (4; 5; 6; 7), of which a first cutting edge (4) and a third cutting edge (6) as well as a second cutting edge (5) and a fourth cutting edge (7) diametrally oppose one another and the point thinning (13) is provided between the second cutting edge (5) and the third cutting edge (6) as well as between the first cutting edge (4) and the fourth cutting edge (7), wherein peripherally of the cutting region (12), the angle between the first cutting edge (4) and the fourth cutting edge (7) and between the second cutting edge (5) and the third cutting edge (6) is greater than 90°, in particular equal to 100°.

6. End mill (1) according to claim 5, **characterised in that** between the first cutting edge (4) and the second cutting edge (5) as well as between the third cutting edge (6) and the fourth cutting edge (7), further point thinning (16) is provided which has an angle of 20° to 40° with respect to the rotational axis (9) of the end mill (1).

7. End mill (1) according to one of the preceding claims, **characterised in that** the cutting edges (4; 5; 6; 7) in the cutting region (3) run helically around the rotational axis (9) of the end mill (1) and each cutting edge (4; 5; 6; 7) has on the end side (12) of the cutting region (3), a single, flat or continuously curved end surface (15) which limits the cutting edge (4; 5; 6; 7) in the longitudinal direction of the end mill (1) on the end side (12).

8. End mill (1) according to claim 7, **characterised in that** the end surface (15) of each cutting edge (4; 5; 6; 7) on the secondary cutting edge (11) has a clearance angle between 5° and 7°, in particular equal to 6°, to a plane vertical to the rotational axis (9) of the end mill (1).

9. End mill (1) according to one of the preceding claims, **characterised in that** each secondary cutting edge (11) has a curved path.

10. End mill (1) according to claim 9, **characterised in that** each secondary cutting edge (11) in a radially outer region has an outside-centre position.

11. End mill (1) according to one of the preceding claims, **characterised in that** the cutting edges (4; 5; 6; 7) on the end side (12) of the cutting region (3) have a concave grinding.

12. End mill (1) according to one of the preceding claims, **characterised in that** the core (8) of the cutting region (3) has two conical sections (19; 20) with different conicity.

## Revendications

1. Fraise à queue (1), de préférence en métal dur plein, avec une section de fixation (2) et une zone de coupe (3), dans laquelle la zone de coupe (3) est formée par un mandrin (8) et trois ou quatre lames (4 ; 5 ; 6 ; 7) s'étendant en hélice autour d'un axe de rotation (9) de la fraise à queue (1) disposées autour du mandrin (8), dont chacune présente respectivement une lame principale (10) côté périphérique et une lame accessoire (11) sur un côté avant (12) de la zone de coupe (3), dans laquelle sur le côté avant (12) de la zone de coupe (3) au moins un appointissage (13) du mandrin (8) est prévu entre deux lames (4 ; 5 ; 6 ; 7) contiguës l'une à l'autre, **caractérisée en ce que** l'appointissage (13) présente un angle de 30° à 40° par rapport à l'axe de rotation (9) de la fraise à queue (1).

2. Fraise à queue (1) selon la revendication 1, **caractérisée en ce que** l'appointissage (13) est réalisé en tant qu'évidement s'approchant en direction de la section de fixation (2) au côté avant (12) de la zone de coupe (3) de l'axe de rotation (9) de la fraise à queue (1) dans la zone du côté avant (12) de la zone de coupe (3).

3. Fraise à queue (1) selon la revendication 1 ou 2, **caractérisée en ce que** l'appointissage (13) s'étend dans le sens radial sensiblement jusqu'à l'axe de rotation (9) de la fraise à queue (1) et délimite la lame accessoire (11) dans la zone de l'axe de rotation (9) de la fraise à queue (1).

4. Fraise à queue (1) selon l'une quelconque des revendications 1 à 3, **caractérisée en ce que** les lames (4 ; 5 ; 6 ; 7) sont réparties irrégulièrement dans le sens périphérique de la fraise à queue (1).

5. Fraise à queue (1) selon l'une quelconque des revendications précédentes, **caractérisée en ce que** la zone de coupe (12) comporte dans l'ensemble quatre lames (4 ; 5 ; 6 ; 7) dont une première lame (4) et une troisième lame (6) ainsi qu'une deuxième lame (5) et une quatrième lame (7) se font face diamétralement les unes aux autres et l'appointissage (13) est prévu entre la deuxième lame (5) et la troisième lame (6) ainsi qu'entre la première lame (4) et la quatrième lame (7), dans laquelle dans le sens périphérique de la zone de coupe (12) l'angle entre la première lame (4) et la quatrième lame (7) et entre la deuxième lame (5) et la troisième lame (6) est supérieur à 90°, en particulier égal à 100°.

6. Fraise à queue (1) selon la revendication 5, **caractérisée en ce qu'**entre la première lame (4) et la deuxième lame (5) ainsi qu'entre la troisième lame (6) et la quatrième lame (7) un autre appointissage (16) est prévu, lequel présente un angle de 20° à 40° par rapport à l'axe de rotation (9) de la fraise à queue (1).

7. Fraise à queue (1) selon l'une quelconque des revendications précédentes, **caractérisée en ce que** les lames (4 ; 5 ; 6 ; 7) s'étendent dans la zone de coupe (3) en hélice autour de l'axe de rotation (9) de la fraise à queue (1) et chaque lame (4 ; 5 ; 6 ; 7) présente sur le côté avant (12) de la zone de coupe (3) une seule surface avant (15) plane ou courbée en permanence qui délimite la lame (4 ; 5 ; 6 ; 7) dans le sens longitudinal de la fraise à queue (1) sur le côté avant (12).

8. Fraise à queue (1) selon la revendication 7, **caractérisée en ce que** la surface avant (15) de chaque lame (4 ; 5 ; 6 ; 7) sur la lame accessoire (11) présente un angle de dépouille entre 5° et 7°, en particulier égal à 6°, par rapport à un plan perpendiculaire à l'axe de rotation (9) de la fraise à queue (1).

9. Fraise à queue (1) selon l'une quelconque des revendications précédentes, **caractérisée en ce que** chaque lame accessoire (11) présente une étendue courbée.

10. Fraise à queue (1) selon la revendication 9, **caractérisée en ce que** chaque lame accessoire (1) présente dans une zone radialement extérieure une position de précentre.

11. Fraise à queue (1) selon l'une quelconque des revendications précédentes, **caractérisée en ce que** les lames (4 ; 5 ; 6 ; 7) présentent sur le côté avant (12) de la zone de coupe (3) un bombé concave.

12. Fraise à queue (1) selon l'une quelconque des revendications précédentes, **caractérisée en ce que** le mandrin (8) de la zone de coupe (3) présente deux sections coniques (19 ; 20) avec une conicité différente.
